# FASCICULE DE BREVET EUROPEEN

(11) **EP 1 086 045 B1**
(45) Date de publication et mention de la délivrance du brevet: **12.03.2003**
(21) Numéro de dépôt: 99917001.2
(22) Date de dépôt: 06.05.1999
(51) Int. Cl.: C01B 21/16

(54) **PROCEDE DE PREPARATION D'HYDRATE D'HYDRAZINE**
VERFAHREN ZUR HERSTELLUNG VON HYDRAZINHYDRAT
METHOD FOR PREPARING HYDRAZINE HYDRATE

(30) Priorité: 14.05.1998 FR 9806077
(43) Date de publication de la demande: 28.03.2001
(73) Titulaire: Atofina, 92800 Puteaux (FR)
(72) Inventeur: SCHIRMANN, Jean-Pierre, F-75011 Paris (FR)
(74) Mandataire: Dang, Doris
(86) Numéro de dépôt international: FR9901074
(87) Numéro de publication internationale: WO99058446

(56) Documents cités:
- EP-A- 0 399 866
- US-A- 4 657 751
- US-A- 5 252 309
- DATABASE WPI Section Ch, Week 8128 Derwent Publications Ltd., London, GB; Class E36, AN 81-50501D XP002088233 & JP 56 059608 A (OTSUKA KAGAKU YAKUHIN KK), 23 mai 1981

## Description

La présente invention concerne un procédé de préparation d'hydrate d'hydrazine. La présente invention concerne plus précisément un procédé amélioré de fabrication d'hydrate d'hydrazine à partir d'azine de la méthyl éthyl cétone obtenue par oxydation de l'ammoniac par l'eau oxygénée en présence d'un coréactif ou d'un catalyseur.

La production industrielle de l'hydrate d'hydrazine se fait selon les procédés RASCHIG, BAYER ou à l'eau oxygénée.

Dans le procédé RASCHIG, on oxyde l'ammoniac par un hypochlorite pour obtenir une solution diluée d'hydrate d'hydrazine qu'il faut ensuite concentrer par distillation. Ce procédé peu sélectif, peu productif et très polluant, n'est presque plus utilisé.

Le procédé BAYER est une variante du procédé RASCHIG qui consiste à déplacer un équilibre chimique en piégeant, à l'aide d'acétone, l'hydrazine formée sous forme d'azine (CH₃)₂C=N-N=C-(CH₃)₂. L'azine est ensuite isolée puis hydrolysée en hydrate d'hydrazine. Les rendements sont améliorés, mais il n'y a pas d'amélioration quant aux rejets dans l'environnement.

Le procédé à l'eau oxygénée consiste à oxyder un mélange d'ammoniac et d'une cétone par l'eau oxygénée en présence d'un moyen d'activation de l'eau oxygénée pour faire directement l'azine qu'il suffit ensuite d'hydrolyser en hydrate d'hydrazine. Les rendements sont élevés et le procédé n'est pas polluant. Ce procédé à l'eau oxygénée est utilisé par la demanderesse et est décrit dans de nombreux brevets, par exemple US 3 972 878, US 3 972 876, US 3 948 902 et US 4 093 656.

L'hydrolyse d'une azine en hydrate d'hydrazine est décrite dans les brevets US 4 724 133 SCHIRMANN et al., US 4 725 421 SCHIRMANN et al. et GB 1 164 460. Cette hydrolyse s'effectue dans une colonne de distillation qu'on alimente avec de l'eau et de l'azine, en tête on récupère la cétone et en pied l'hydrate d'hydrazine.

EP 70 155 décrit aussi un autre procédé à l'eau oxygénée.

Ces procédés sont aussi décrits dans ULLMANN'S ENCYCLOPEDIA OF INDUSTRIAL CHEMISTRY (1989), vol A 13, pages 182-183 et les références incluses.

Dans les procédés à l'eau oxygénée, on oxyde l'ammoniac par le peroxyde d'hydrogène en présence d'une cétone et d'un moyen d'activation du peroxyde d'hydrogène selon la réaction globale suivante, en faisant une azine :

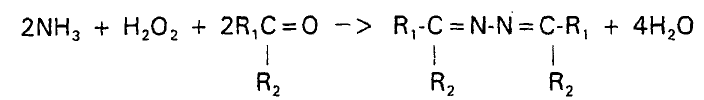

Le moyen d'activation peut être un nitrile, un amide, un acide carboxylique ou encore un dérivé du sélénium, de l'antimoine ou de l'arsenic. Puis l'azine est hydrolysée en hydrazine et la cétone régénérée est recyclée selon la réaction suivante :

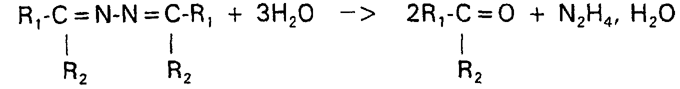

Cette hydrolyse s'effectue dans une colonne à distiller, on récupère la cétone en tête et l'hydrate d'hydrazine en pied. La demanderesse a découvert que, dans ces procédés à l'eau oxygénée et utilisant la méthyl éthyl cétone (MEK), il se formait de faibles quantités d'un sous-produit, l'oxime de la MEK 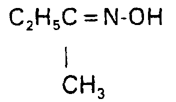 et que la présence de cette oxime perturbait le fonctionnement du procédé. En particulier, l'oxime est difficilement séparable de l'azine, on la trouve dans la colonne d'hydrolyse de l'azine et elle provoque une décomposition de l'hydrate d'hydrazine. Le procédé de l'invention consiste à purger cette oxime.

La présente invention est donc un procédé de préparation d'hydrate d'hydrazine dans lequel :
(a) on fait réagir l'ammoniac, le peroxyde d'hydrogène et la méthyl éthyl cétone en présence d'une solution de travail pour former une azine ;
(b) on sépare la solution de travail de l'azine, contenant l'oxime de méthyl éthyl cétone et éventuellement la méthyl éthyl cétone ;
(c) on recycle la solution de travail à l'étape (a) après un traitement éventuel ;
(d) on hydrolyse l'azine pour obtenir de l'hydrate d'hydrazine et régénère la méthyl éthyl cétone ;
(e) on recycle à l'étape (a) la méthyl éthyl cétone, ce procédé étant caractérisé en ce que, dans l'étape (d), on effectue une purge de l'oxime de la méthyl éthyl cétone.

### Etape (a)

L'eau oxygénée peut être utilisée sous la forme commerciale habituelle, par exemple en solution aqueuse entre 30 et 90 % en poids de H₂O₂. Avantageusement on peut ajouter un ou plusieurs stabilisants usuels des solutions peroxydiques, par exemple de l'acide phosphorique, pyrophosphorique, citrique, nitrilo-triacétique, éthylènediaminetétracétique ou les sels d'ammonium ou de métal alcalin de ces acides. La quantité à utiliser est avantageusement comprise entre 10 et 1000 ppm et, de préférence, entre 50 et 250 ppm de l'ensemble des réactifs et de la solution de travail à l'entrée du réacteur. L'ammoniac peut être anhydre ou en solution aqueuse.

La solution de travail contient un moyen d'activation de l'eau oxygénée, c'est-à-dire un produit tel qu'on puisse produire de l'azine à partir d'ammoniac, d'eau oxygénée et de la méthyl éthyl cétone.

Cet activateur peut être choisi parmi les oxyacides organiques ou inorganiques, leurs sels d'ammonium et d'une façon générale leurs dérivés : anhydrides, esters, amides, nitriles, peroxydes d'acyle, ou leurs mélanges. Avantageusement, on utilise les amides, les sels d'ammonium et les nitriles.

A titre d'exemple, on peut citer (i) des amides d'acides carboxyliques de formule R₅COOH dans laquelle R₅ est l'hydrogène, un radical alkyle linéaire ayant de 1 à 20 atomes de carbone, ou un radical alkyle ramifié ou cyclique ayant de 3 à 12 atomes de carbone, ou un radical phényle pouvant être substitué, (ii) des amides d'acides polycarboxyliques de formule R₆(COOH)ₙ dans laquelle R₆ représente un radical alkylène ayant de 1 à 10 atomes de carbone et n étant un nombre entier supérieur ou égal à 2, R₆ peut être une simple liaison, alors n vaut 2. Les radicaux R₅ et R₆ peuvent être substitués par des halogènes, des groupements OH, NO₂ ou méthoxy. On peut citer aussi les amides des acides organiques de l'arsenic. Les acides organiques de l'arsenic sont, par exemple, l'acide méthylarsonic, l'acide phénylarsonic et l'acide cacodylique.

Les amides préférés sont le formamide, l'acétamide, le monochloracétamide et le propionamide.

Parmi les sels d'ammonium, on utilise avantageusement les sels d'hydracides, d'oxyacides minéraux, d'acides arylsulfoniques, d'acides R₅COOH ou d'acides R₆(COOH)ₙ, R₅, R₆ et n étant définis précédemment, des acides organiques de l'arsenic.

Les sels d'ammonium préférés sont le formiate, l'acétate, le monochloracétate, le propionate, le phénylarsonate et le cacodylate. Parmi les nitriles, on peut citer avantageusement les produits de formule R₇(CN)ₙ, n pouvant varier de 1 à 5 selon la valence de R₇, R₇ est un alkyle cyclique ou non cyclique ayant de 1 à 12 atomes de carbone ou de benzène ou de la pyridine. R₇ peut être substitué par des groupements qui ne s'oxydent pas dans le réacteur de l'étape a, par exemple des halogènes, des groupes carboxyliques, esters carboxyliques, nitro, amine, hydroxy ou acide sulfonique.

Les nitriles préférés sont l'acétonitrile et le propionitrile.

On forme la solution de travail en mettant en solution un ou plusieurs produits choisis parmi les oxyacides organiques ou inorganiques, leurs sels d'ammonium et d'une façon générale leurs dérivés : anhydrides, esters, amides, nitriles, peroxydes d'acyle, ou leurs mélanges. Avantageusement, on utilise les amides, les sels d'ammonium ou les nitriles précédents.

Cette solution peut être aqueuse ou à base d'un alcool ou d'un mélange d'alcool et eau. Parmi les alcools, on utilise avantageusement les alcools aliphatiques saturés ayant de 1 à 6 atomes de carbone et, de préférence, 1 à 2 atomes de carbone.

On utilise aussi avantageusement des diols et plus particulièrement des diols ayant de 2 à 5 atomes de carbone. On peut citer par exemple le glycol, le propylèneglycol, le 1,3 propanediol, le 1,3 et 1,4 butanediol et le 1,5 pentanediol.

Selon une forme avantageuse de l'invention, la solution de travail est une solution alcoolique d'un acide organique de l'arsenic et est décrite dans le brevet EP 70155 dont le contenu est incorporé dans la présente demande. Selon une autre forme avantageuse de l'invention, la solution de travail est une solution aqueuse d'un amide d'acide faible et du sel d'ammonium correspondant à cet acide telle que décrite dans le brevet EP 487 160.

Ces amides d'acides faibles sont dérivés des acides carboxyliques correspondants qui ont une constante de dissociation inférieure à 5 x 10⁻⁵, c'est-à-dire les acides qui ont un pK plus grand que 4,3 en solution aqueuse à 25°C.

Pour les acides polycarboxyliques, ce sont les acides dont la constante de la première ionisation est inférieure à 5 x 10⁻⁵.

À titre d'exemple, on peut citer les acides carboxyliques de formule R₈COOH dans laquelle R₈ est un radical alkyle linéaire ayant de 1 à 20 atomes de carbone, ou un radical alkyle ramifié ou cyclique ayant de 3 à 12 atomes de carbone, ou un radical phényle pouvant être substitué, des acides polycarboxyliques de formule R₉(COOH)ₙ dans laquelle R₉ représente un radical alkylène ayant de 1 à 10 atomes de carbone et n étant un nombre supérieur ou égal à 2, R₉ peut être une simple liaison alors n vaut 2. Les radicaux R₈ et R₉ peuvent être substitués par des halogènes, des groupements OH, NO₂ ou méthoxy. On utilise de préférence l'acétamide, le propionamide, le n-butyramide ou l'isobutyramide.

Le sel d'ammonium correspondant de l'acétamide est l'acétate d'ammonium.

On ne sortirait pas du cadre de l'invention en formant le sel d'ammonium in situ c'est-à-dire en utilisant l'acide carboxylique correspondant qui donne par réaction avec l'ammoniac le sel d'ammonium.

Les proportions de l'amide et du sel d'ammonium correspondant peuvent varier dans de larges limites. On utilise habituellement de 1 à 25 parties du sel d'ammonium pour 5 parties d'amide et de préférence 2 à 10.

Les réactifs peuvent être utilisés en quantités stoechiométriques, cependant on utilise par mole d'eau oxygénée 0,2 à 5 moles et de préférence 1,5 à 4 moles de méthyl éthyl cétone ; 0,1 à 10 moles et de préférence 1,5 à 4 moles d'ammoniac. La quantité de solution de travail est comprise entre 0,1 et 1 kg par mole d'eau oxygénée. Cette quantité dépend de sa qualité, c'est-à-dire de sa force catalytique ou son activité qui permet de convertir les réactifs en azine. Les proportions des réactifs fixées ci-dessus permettent d'obtenir une conversion totale de l'eau oxygénée et une production d'azine correspondant à plus de 50 % de l'eau oxygénée engagée et pouvant atteindre 90 %.

La mise en contact de l'eau oxygénée, de l'ammoniac, de la méthyl éthyl cétone avec la solution de travail peut s'effectuer de façon quelconque.

Avantageusement, on opère dans un milieu homogène ou dans un milieu qui assure au moins une solubilisation suffisante des réactifs pour pouvoir obtenir de l'azine. La réaction peut se faire dans une très large plage de température, par exemple entre 0 et 100°C, et on opère avantageusement entre 30 et 70°C. Bien qu'on puisse opérer à toute pression, il est plus simple d'être à la pression atmosphérique, mais on peut monter jusqu'à environ 10 bars si c'est nécessaire pour maintenir de préférence la réaction de l'étape a en phase liquide.

Les réactifs peuvent être introduits simultanément ou séparément et dans un ordre quelconque dans la solution de travail. On peut utiliser toutes sortes de réacteurs, agités ou non agités, ou même de simples capacités qu'on peut disposer en parallèle, en série, à co-courant ou à contre-courant, ou tout combinaison de ces possibilités.

### Etape (b)

On sépare (i) l'azine et éventuellement l'excès de méthyl éthyl cétone et (ii) la solution de travail par des moyens connus tels que l'extraction liquide-liquide, la distillation, la décantation ou toute combinaison de ces possibilités.

La méthyl éthyl cétone est avantageuse parce que son azine est insoluble dans la solution de travail.

Dans l'étape (c), la solution de travail peut être traitée.

Les étapes (a), (b) et (c) sont décrites par exemple dans les brevets EP 399 866 et EP 518 728 dont le contenu est incorporé dans la présente demande.

La demanderesse a observé par exemple que l'azine obtenue à l'étape (b) après séparation d'avec la solution de travail est accompagnée de méthyl éthyl cétone n'ayant pas réagi et de différentes impuretés. La demanderesse, sans être liée par cette explication, pense que ces impuretés sont formées au cours de l'étape (a) et sont dues à la présence simultanée de peroxyde d'hydrogène, d'ammoniac, de méthyl éthyl cétone et de l'agent d'activation de H₂O₂.
Parmi ces impuretés figure l'oxime de la méthyl éthyl cétone 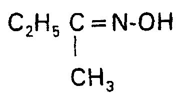 difficilement séparable par distillation de l'azine produit majoritaire, si bien que, dans les procédés industriels, elles sont envoyées simultanément dans l'équipement qui permet d'hydrolyser l'azine en hydrate d'hydrazine. Ce faisant, la demanderesse a découvert que, lorsqu'on procède à cette hydrolyse dans une colonne réactive à plateaux, l'oxime se concentré sur certains plateaux, mais on observe aussi une décomposition anormale de l'hydrate d'hydrazine, entraînant des baisses de rendement importantes.

L'objet de la présente invention est de fournir un moyen de ne pas subir de pertes de rendement simplement en soutirant l'oxime régulièrement par un soutirage latéral de façon à empêcher son accumulation. Ce faisant, on observe effectivement que le rendement d'hydrolyse de l'azine en hydrate d'hydrazine reste élevé et ne décroît pas.

L'étape (d) s'effectue par exemple dans une colonne à plateaux ou à garnissage de type colonne de distillation qu'on alimente avec l'azine provenant de l'étape (b) et de l'eau. On obtient (i) en tête, la méthyl éthyl cétone sous forme d'un azéotrope avec l'eau et (ii) en pied, une solution aqueuse d'hydrate d'hydrazine.

L'hydrolyse des azines est connue. Par exemple, E.C. GILBERT, dans un article dans le Journal of American Chemical Society vol.51, pages 3397-3409(1929), décrit les réactions équilibrées de formation d'azine et les réactions d'hydrolyse de celles-ci et fournit les paramètres thermodynamiques du système dans le cas d'azines solubles dans l'eau. Par exemple, l'hydrolyse de l'azine de l'acétone est décrite dans US 4 724 133. S'agissant des azines insolubles dans les solutions aqueuses (par exemple l'azine de la méthyl éthyl cétone 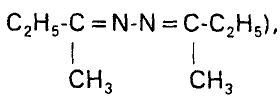 l'hydrolyse doit être réalisée dans une colonne réactive, de telle sorte qu'en séparant continuellement la méthyl éthyl cétone en tête de colonne de distillation et l'hydrate d'hydrazine en pied de colonne, on peut parvenir à une hydrolyse totale. Bien entendu ce système est au meilleur de son fonctionnement lorsqu'on travaille en continu comme décrit dans les brevets français 1 315 348 ou anglais 1 211 547, ou encore le brevet US 4 725 421.

Dans tous ces brevets, la réaction est réalisée dans une colonne de distillation à garnissage ou mieux à plateaux fonctionnant sous une pression de 2 à 25 bars et avec une température de pied de 150°C à 200°C.

Lorsqu'on travaille avec de l'azine pure, c'est-à-dire obtenue par exemple à partir d'hydrate d'hydrazine et de méthyl éthyl cétone, on constate effectivement en travaillant selon ces brevets, que l'on obtient avec un bon rendement des solutions diluées d'hydrate d'hydrazine.

Dans cette colonne, s'effectuent l'hydrolyse de l'azine et la séparation de l'hydrate d'hydrazine d'avec la méthyl éthyl cétone. Ces conditions sont connues. L'homme de métier détermine facilement le nombre de plateaux ou la hauteur de garnissage, ainsi que les points d'alimentation en azine et en eau. On obtient en pied des solutions à 30 ou même jusqu'à 45 % en poids d'hydrate d'hydrazine. Ce rapport molaire eau/azine à l'alimentation de cette colonne est au moins supérieur à la stoechiométrie et avantageusement compris entre 5 et 8. Le pied de colonne est entre 150°C et 200°C, de préférence 175 à 190°C. La pression est fonction de la température d'ébullition de l'azine, de l'eau et du réactif portant un groupe carbonyle. Une telle hydrolyse est décrite dans US 4 725 721.

Selon le nombre de plateaux ou la hauteur de garnissage, la position de l'alimentation en azine et la position de l'alimentation en eau, le reflux, la nature de l'azine etc..., l'homme du métier peut déterminer facilement dans quelle partie de la colonne on obtient la concentration maximum en oxime. Il est en effet plus simple de purger l'oxime par un soutirage à l'endroit où sa concentration est maximum. On peut faire un soutirage en continu, ou par batches, l'essentiel étant d'éviter l'accumulation d'oxime dans cette colonne puisque sa présence conduit à une décomposition de l'hydrate d'hydrazine.

La réaction de l'étape (a) peut produire une azine contenant jusqu'à 2 % en poids d'oxime.

On évite que la concentration d'oxime dépasse 15 % en poids sur les plateaux ou dans les parties de la colonne où sa concentration est maximum.

Par exemple, lorsqu'on opère avec l'azine de la méthyl éthyl cétone provenant d'une opération d'oxydation avec l'eau oxygénée selon le brevet EP 70 155 ou encore selon les brevets EP 399 866, EP 518 728 ou EP 487 160, on observe que cette azine n'est pas pure, mais qu'elle contient une quantité d'oxime pouvant varier entre 0,1 et 1 % d'oxime de la méthyl éthyl cétone 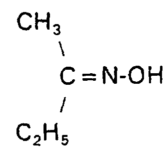 dont le point d'ébullition est de 151°C à pression atmosphérique à comparer à 161°C pour l'azine de la méthyl éthyl cétone. Il est illusoire de vouloir séparer ces deux composés par distillation. Par le biais de recyclages, on peut même voir monter le taux d'oxime à quelques pourcents.

Industriellement, la demanderesse a trouvé que l'on pouvait introduire l'azine contenant de l'oxime dans la colonne d'hydrolyse, et que cette oxime du fait de son comportement azéotropique avec l'eau se classait dans la colonne à un niveau intermédiaire entre l'hydrate d'hydrazine et la méthyl éthyl cétone et que, de ce fait, on pouvait assez aisément la séparer par soutirage latéral. Cela étant, la demanderesse a aussi trouvé que si on laisse le taux d'oxime monter dans la colonne, on observe concurremment un taux croissant de décomposition de l'hydrate d'hydrazine. Cette décomposition est liée à la présence d'oxime, comme le montrent les exemples.

### Exemple 1

Dans une colonne en acier inoxydable 316 L de hauteur 3 m,de diamètre Ø = 70 mm équipée de 40 plateaux à monocloche perforée de diamètre 27 mm et espacés chacun de 80 mm. Les trous de chaque cloche ont un diamètre de 2 mm et sont au nombre de 14. Le volume utile de liquide retenu sur le plateau est de 33 ml. Il peut être ajusté en jouant sur la hauteur du déversoir.

Cette colonne est équipée de prises de températures (thermocouples) sur les plateaux n° 3, 6, 10, 13, 15, 19, 26, 28, 31 et 37 ainsi qu'en tête et en pied. Des sorties de soutirage équipées de vannes sont installées aux plateaux 3, 10, 19, 26, 31 et 37.

L'introduction des réactifs est possible au niveau des plateaux 5, 8, 12, 19, 22, 26 et 34. Le débit de reflux est mesuré à l'aide d'un rotamètre préalabement étalonné. L'apport de calories en pied de colonne est assuré par un chauffage électrique. L'adiabaticité du fût de la colonne est assurée par une gaine d'air chaud obtenu par chauffage électrique de façon à équilibrer les températures à l'intérieur et à l'extérieur de la colonne.

L'alimentation des réactifs est réalisée par pompe doseuse.

Le condenseur est alimenté par une circulation d'huile chaude maintenue entre 130 et 140°C.

Le mode opératoire est le suivant :

On place dans le bouilleur (de volume 800 cm³) de la colonne, 400 cm³ d'eau bipermutée. L'ensemble de l'installation étant fermé, on démarre le chauffage et on laisse monter la pression jusqu'à 8 bars. Puis au fur et à mesure que l'eau monte dans la colonne on purge les inertes en maintenant la pression à 8 bars. Lorsque le niveau du bouilleur atteint 200 cm³, on commence l'injection d'eau au 34ème plateau pour continuer la constitution du ballast d'eau dans la colonne à raison de 645 g en 1 h 15 minutes. Lorsque la température atteint 162°C au 19ème plateau, on commence l'injection d'azine au 26ème plateau à raison de 543 g de solution d'azine à 82,4 % (3,2 moles) en 1 h 30 minutes. On continue à purger les inertes de la colonne en maintenant la pression à 8 bars. On laisse s'installer le reflux et on laisse à reflux total jusqu'à ce que le liquide de reflux soit homogène. Puis on démarre l'introduction continue des réactifs et le soutirage en pied et en tête. On opère à reflux 1. L'azine est introduite sous forme de mélange avec de la MEK à raison de 275,4 g/h (titrant 82,4 % en azine et 3 % en oxime de la MEK) et de 289 g/h d'eau bipermutée. La température de tête s'établit à 148°C alors que la température de pied est de 180-181°C. En régime stationnaire, on soutire du pied 200 g/h de solution aqueuse d'hydrate d'hydrazine incolore à 35 % en poids. La teneur en oxime au niveau du plateau 26 est de 14,5 % après quelques dizaines d'heures de marche. On effectue sur ce plateau un soutirage de 20 ml toutes les cinq heures, d'un mélange d'azine, d'hydrazine, d'oxime et d'eau. En tête on soutire l'azéotrope MEK-eau, ce qui représente après refroidissement à température ordinaire une phase organique de 300 g/h titrant 86,5 % en MEK et une phase aqueuse de 55 g/h titrant 20 % en MEK.

### Exemple 2

On opère comme dans l'exemple 1, mais en opérant avec une azine synthétique de la MEK ne contenant pas d'oxime. On ne pratique aucun soutirage. On observe un résultat similaire.

### Exemple 3 (non conforme à l'invention)

On opère comme dans l'exemple 1, mais on ne pratique aucun soutirage au plateau 26. On constate que le titre en hydrate d'hydrazine du soutirage en pied de colonne ne titre plus que 31 % en poids en hydrate d'hydrazine.

## Revendications

1. Procédé de préparation d'hydrate d'hydrazine dans lequel :
(a) on fait réagir l'ammoniac, le peroxyde d'hydrogène et la méthyl éthyl cétone en présence d'une solution de travail pour former une azine ;
(b) on sépare la solution de travail d'avec l'azine contenant l'oxime de méthyl éthyl cétone et éventuellement la méthyl éthyl cétone n'ayant pas réagi ;
(c) on recycle la solution de travail à l'étape (a) après un traitement éventuel ;
(d) on hydrolyse l'azine dans une colonne à distiller pour obtenir de l'hydrate d'hydrazine en pied et régénérer la méthyl éthyl cétone en tête;
(e) on recycle à l'étape (a) la méthyl éthyl cétone, ce procédé étant **caractérisé en ce que**, dans l'étape (d), on soutire latéralement de la colonne à distiller de l'oxime de méthyl éthyl cétone.

## Claims

1. Process for the preparation of hydrazine hydrate, in which:
(a) ammonia, hydrogen peroxide and methyl ethyl ketone are reacted in the presence of a working solution in order to form an azine;
(b) the working solution is separated from the azine comprising methyl ethyl ketone oxime and optionally unreacted methyl ethyl ketone;
(c) the working solution is recycled to the stage (a) after an optional treatment;
(d) the azine is hydrolysed in a distillation column in order to obtain hydrazine hydrate at the bottom and to regenerate the methyl ethyl ketone at the top;
(e) the methyl ethyl ketone is recycled to the stage (a), this process being **characterized in that**, in the stage (d), methyl èthyl. ketone oxime is drawn off as a sidestream from the distillation column.

## Patentansprüche

1. Verfahren zur Herstellung von Hydrazinhydrat, bei dem
(a) man Ammoniak, Wasserstoffperoxid und Methylethylketon in Gegenwart einer Arbeitslösung reagieren läßt, um ein Azin zu bilden;
(b) man die Arbeitslösung vom Azin, welches das Oxim des Methylethylketons und gegebenenfalls nicht umgesetztes Methylethylketon enthält, abtrennt;
(c) man die Arbeitslösung, gegebenenfalls nach einer Behandlung, wieder dem Schritt (a) zuführt;
(d) man das Azin in einem Destillieraufsatz hydrolysiert, um am Fuß das Hydrazinhydrat zu erhalten und am Kopf das Methylethylketon zu regenerieren;
(e) man das Methylethylketon wieder dem Verfahrensschritt (a) zuführt,
**dadurch gekennzeichnet,**
**daß** man in Schritt (d) das Oxim des Methylethylketons seitlich aus dem Destillieraufsatz abzieht.
